(19) Europäisches Patentamt
European Patent Office
Office européen des brevets

(11) EP 1 084 535 B1

(12) **FASCICULE DE BREVET EUROPEEN**

(45) Date de publication et mention de la délivrance du brevet:
**04.12.2002 Bulletin 2002/49**

(21) Numéro de dépôt: **99923648.2**

(22) Date de dépôt: **02.06.1999**

(51) Int Cl.$^7$: **H04B 1/707**

(86) Numéro de dépôt international:
**PCT/FR99/01287**

(87) Numéro de publication internationale:
**WO 99/063678 (09.12.1999 Gazette 1999/49)**

(54) **RECEPTEUR POUR SYSTEME AMRC**

EMPFÄNGER FÜR CDMA-SYSTEM

RECEIVER FOR CDMA SYSTEM

(84) Etats contractants désignés:
**DE ES FR GB IT**

(30) Priorité: **03.06.1998 FR 9806952**

(43) Date de publication de la demande:
**21.03.2001 Bulletin 2001/12**

(73) Titulaire: **COMMISSARIAT A L'ENERGIE ATOMIQUE**
**75752 Paris Cédex 15 (FR)**

(72) Inventeurs:
- **OUVRY, Laurent**
  **F-38000 Grenoble (FR)**
- **LATTARD, Didier**
  **F-38680 Rencurel (FR)**
- **LEQUEPEYS, Jean-René**
  **F-38600 Fontaine (FR)**

(74) Mandataire: **Des Termes, Monique et al**
**Société Brevatome**
**3, rue du Docteur Lancereaux**
**75008 Paris (FR)**

(56) Documents cités:
**EP-A- 0 810 741** **WO-A-95/26094**

- **CHEUNG PKP; RAPAJIC P B: "Blind adaptive code acquisition for multiuser DS-CDMA systems" PROCEEDINGS OF 8TH INTERNATIONAL SYMPOSIUM ON PERSONAL, INDOOR AND MOBILE RADIO COMMUNICATIONS, vol. 2, 1 - 1 septembre 1997, pages 337-341, XP002091165 Helsinki, Finland**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 084 535 B1

Printed by Jouve, 75001 PARIS (FR)

## Description

### Domaine technique

La présente invention a pour objet un récepteur pour système AMRC, c'est-à-dire pour des systèmes à accès multiple à répartition par codes, technique connue en anglais sous l'abréviation CDMA (pour "Code Division Multiple Access"). Plus généralement, cette technique entre dans le cadre de la transmission numérique à étalement de spectre par séquence directe (en abrégé DSSS pour "Direct Sequence Spread Spectrum").

L'invention trouve des applications dans les systèmes de radiocommunication avec les mobiles, dans les réseaux locaux sans fil (WLAN : "Wireless Local Area Network"), dans les boucles locales d'abonnés sans fil (WLL "Wireless Local Loop"), dans la télévision câblée, etc...

### Etat de la technique antérieure

On suppose qu'il s'agit de transmettre une information constituée d'une suite de symboles de durée Ts, chaque symbole pouvant être, par exemple, un élément binaire égal à 0 ou 1.

L'étalement de spectre par séquence directe consiste à moduler chaque symbole du signal numérique par une séquence binaire pseudoaléatoire. Une telle séquence est composée de N impulsions ou "chips" dont la durée Tc est égale à Ts/N. Le signal modulé présente un spectre qui s'étale sur une plage N fois plus large que celui du signal original. A la réception, la démodulation consiste à corréler le signal avec la séquence utilisée à l'émission, ce qui permet de retrouver l'information liée au symbole de départ.

Les avantages de cette technique sont nombreux :

- discrétion, puisque la densité spectrale de puissance du signal est réduite d'un facteur N ;
- immunité vis-à-vis des émissions à bande étroite volontaires ou parasites, puisque l'opération de corrélation réalisée au niveau du récepteur conduit à l'étalement spectral de ces émissions ;
- interception difficile puisque la démodulation requiert la connaissance de la séquence utilisée à l'émission ;
- résistance aux trajets multiples qui, sous certaines conditions, provoquent des évanouissements sélectifs en fréquence et donc n'affectent que partiellement le signal émis ;
- accès multiple possible par l'affectation de différentes séquences à différents utilisateurs.

Tirant parti de ce dernier avantage, la technique AMRC (CDMA) consiste en l'émission simultanée, dans une même bande, de plusieurs signaux étalés utilisant des séquences pseudoaléatoires d'étalement différentes. Les séquences sont choisies de façon que les intercorrélations restent faibles.

Si les différents émetteurs n'ont pas de référence commune de temps, le système est dit asynchrone puisque les débuts des symboles propres à chaque utilisateur parviennent au récepteur à des instants différents. C'est ce que représente la figure 1 annexée où les lignes de la partie gauche représentent le temps pour trois utilisateurs différents 1, 2 et 3 et les flèches dirigées vers le haut représentent les instants (les "tops") de début d'émission des symboles. La partie centrale représente symboliquement les trajets vers un même récepteur. La partie droite montre la position temporelle des débuts des symboles reçus pour chacun des utilisateurs, c'est-à-dire, finalement, les déphases des symboles des différents utilisateurs les uns par rapport aux autres.

On peut faire en sorte que les débuts des symboles reçus 1, 2 et 3 coïncident (modulo la période Ts d'un symbole). Le système est alors dit "synchrone". Il est illustré sur la figure 2 avec les mêmes conventions.

Dans un système AMRC asynchrone, les séquences possèdent des phases relatives quelconques au niveau de la réception. Une bonne séparation des signaux suppose donc que les intercorrélations encre séquences soient faibles, quelles que soient les phases relatives entre séquences. En revanche, en ARMC synchrone, les séquences arrivant avec des phases relatives nulles, le nombre d'intercorrélations devant être proches de zéro est beaucoup plus faible. Cette particularité donne au système synchrone un avantage très net sur la variante asynchrone en terme de nombre de séquences (donc d'utilisateurs) pouvant coexister sans perturbation mutuelle rédhibitoire.

On peut préciser quelque peu ces questions en donnant une expression du signal émis et du signal reçu. On se placera dans l'hypothèse où les différentes séquences liées à chaque symbole sont synchrones. Cela implique que le nombre N, longueur des séquences comptée en nombre de chips, prend la même valeur quelle que soit la séquence (ou l'émission) concernée.

Sous ces hyptohèses, on peut exprimer le signal émis, en bande de base, par un émetteur de rang k par l'expression :

$$S_k(t) = A_k \sum_{i=0}^{+\infty} a_k(i) \sum_{j=0}^{N-1} c_k(j) p(t - jT_c - iNT_c + \tau_{0k})$$

avec :

- $A_k$ : amplitude du signal émis par l'utilisateur de rang k,
- $a_k(i)$ : symboles de rang i émis par l'utilisateur k,
- $c_k(j)$ : chip de rang j de la séquence k,
- $T_c$ : période chip,
- p(.) : forme du chip ; il s'agit le plus souvent d'une impulsion rectangulaire différente de zéro entre 0 et Tc,
- $\tau_{0k}$ retard (ou avance) sur le signal k.

On suppose, pour simplifier le modèle, que les canaux ne sont pas sélectifs en fréquence.

La réponse impulsionnelle d'un canal pour l'utilisateur de rang k est :

$$h_k(t) = g_k \delta(t - \tau_k)$$

avec :

- $g_k$ : gain complexe correspondant au canal de rang k,
- $\tau_k$ : retard introduit par le canal k,
- $\delta$ : impulsion de Dirac.

Le signal reçu peut s'écrire sous la forme :

$$r(t) = \sum_{k=0}^{K-1} S_k(t) * h_k(t)$$

où le signe * marque un produit de convolution. Cette expression peut encore s'écrire :

$$r(t) = \sum_{k=0}^{K-1} g_k A_k \sum_{i=0}^{+\infty} a_k(i) \sum_{j=0}^{N-1} c_k(j) p(t - jT_c - iNT_c + \tau_{0k} - \tau_k)$$

Si le système est synchrone, alors $\tau_{0k}-\tau_k=\tau$ quel que soit k où $\tau$ est quelconque. Ainsi, dans les émetteurs, il faut ajuster les $\tau_{0k}$ de façon à ce que cette relation soit vérifiée.

Dans le cas où il n'y aurait qu'une seule source émettrice, cette condition serait évidemment remplie.

La figure 3 annexée illustre le principe d'un récepteur de signal à étalement de spectre. Le récepteur représenté comprend un premier circuit 10, qui peut être un filtre adapté ou un corrélateur glissant, un circuit 12 de récupération d'un signal d'horloge de symbole, signal qui permet la synchronisation des moyens du récepteur, éventuellement un circuit de traitement 14 apte à effectuer différents traitements supplémentaires, comme par exemple une multiplication retardée, une estimation de canal, etc..., et enfin un circuit 16 apte à prendre une décision sur la valeur du symbole transmis.

S'il y a plusieurs utilisateurs, donc plusieurs séquences distinctes, le récepteur comprend autant de voies que de séquences, comme représenté sur la figure 4, avec des voies $V_1$, $V_2$, ..., $V_K$ où K est le nombre d'utilisateurs (ou de séquences). Chaque voie restitue les symboles $d_1$, $d_2$, ... $d_k$ propres à sa séquence, donc à l'utilisateur.

Des composants sont aujourd'hui disponibles dans le commerce pour réaliser de tels récepteurs. On peut citer par exemple :

- le composant HFA 3860 de la Société Harris, qui utilise une banque de 8 corrélateurs glissants (appelés "serial

correlators") disposés en parallèle (comme illustré sur la figure 4) ; la récupération de l'horloge symbole est effectuée grâce à un préambule de transmission ;

- le composant SC2001 de la Société Sirius Communications, qui intègre une banque de corrélateurs glissants permettant de traiter un signal à deux utilisateurs synchrones.

Le premier circuit de chaque voie, qu'il s'agisse d'un corrélateur glissant ou d'un filtre adapté, joue un rôle important qui peut être précisé à l'aide des figures 5 et 6.

Un corrélateur glissant (figure 5) comprend schématiquement un générateur de séquence pseudoaléatoire 20 et un multiplieur 22 recevant le signal d'entrée r(t) et la séquence délivrée par le générateur 20, un additionneur 24, un circuit 26 relié à la sortie de l'additionneur 24 et rebouclé sur celui-ci et réalisant un retard. La sortie du corrélateur glissant est reliée à un sous-échantillonneur 28. Les circuits 20, 26, 28 sont commandés par un signal d'horloge symbole Hs.

Quant au filtre adapté (figure 6), il s'agit en général d'un filtre numérique 30 dont les coefficients sont adaptés à la séquence utilisée. Ce filtre reçoit le signal d'entrée r(t) et délivre un signal filtré appliqué encore à un sous-échantillonneur 28. Ce dernier est commandé par le signal d'horloge symbole Hs, qui fixe la cadence des symboles.

Vues de la sortie du sous-échantillonneur 28, ces deux architectures sont équivalentes. En revanche, vues de l'entrée du sous-échantillonneur 28, elles sont différentes puisqu'elles ne délivrent pas le même signal, comme le montrent les figures 7, 8 et 9.

La figure 7, tout d'abord, montre la sortie Sf du filtre numérique adapté de la figure 6, en fonction du rang n des échantillons ; la figure 8 la sortie Sc du corrélateur glissant de la figure 5 lorsque la réplique locale de la séquence émise est alignée avec la séquence émise ; et la figure 9 la sortie Sc de ce même corrélateur glissant lorsque la réplique locale de la séquence n'est pas alignée avec la séquence émise. Le pic de corrélation portant l'information sur le symbole est marquée P sur les figures 7 et 8.

On voit bien, d'après ces figures, que le corrélateur glissant a besoin d'une information liée au rythme des symboles, signal dit "horloge symbole" et noté Hs, pour que la réplique locale de la séquence soit alignée avec la séquence modulant les symboles reçus, sinon la démodulation des symboles est impossible (cas de la figure 9). Le filtre adapté, lui, ne requiert pas cette information. Ainsi, ce qui différencie en premier lieu une structure à corrélateur glissant et une structure à filtre adapté, c'est que la première a besoin d'une information externe de synchronisation.

Un filtre adapté permet la récupération de l'horloge symbole, par exemple par une détection récurrente du pic de corrélation sur une fenêtre de N points (figure 7). La récupération de l'horloge symbole est également possible à l'aide d'un corrélateur glissant, mais de manière plus complexe : il faut modifier pas à pas la phase de la réplique locale de la séquence jusqu'à ce que la sortie du corrélateur glissant corresponde à un maximum d'énergie, donc à un pic de corrélation (cas de la figure 8).

Si ces deux structures permettent de retrouver l'horloge symbole, elles ne le font pas avec la même vitesse : l'opération de récupération de l'horloge symbole dure au maximum N périodes symbole, c'est-à-dire NTs avec un corrélateur glissant, alors qu'elle ne demande qu'une seule période symbole Ts avec un filtre adapté.

L'avantage du filtre adapté est donc évident en terme de rapidité d'acquisition du signal d'horloge symbole. Son inconvénient est sa complexité opératoire, puisque son implantation sous forme de filtre numérique à réponse impulsionnelle finie (travaillant à la cadence chip) requiert N multiplications et N additions pour chaque échantillon. Sa complexité structurelle va de pair avec sa complexité opératoire.

Le corrélateur glissant n'effectue, lui, qu'une multiplication et qu'une addition pour chaque nouvel échantillon. S'il est relativement mal adapté à la récupération de l'horloge, il est en revanche très avantageux en terme de complexité opératoire.

Ainsi, qu'on se tourne vers les filtres adaptés ou vers les corrélateurs glissants on n'échappe pas à certains inconvénients. La présente invention a justement pour but d'y remédier.

## Exposé de l'invention

L'invention propose de combiner les avantages de chacune de ces structures (filtre adapté et corrélateur glissant) en utilisant, dans un récepteur à voies multiples, un filtre adapté dans au moins une voie, ceci pour restituer rapidement et efficacement l'horloge symbole, et en utilisant des corrélateurs glissants dans les autres voies pour bénéficier de leur faible complexité, ces corrélateurs étant commandés par le signal d'horloge symbole produit par le filtre adapté.

Le récepteur de l'invention est donc hybride, en ce sens qu'il comprend au moins une voie utilisant un filtre adapté et d'autres voies utilisant des corrélateurs glissants. La complexité du récepteur se trouve réduite par l'usage des corrélateurs, sans que l'efficacité de la restitution du signal d'horloge symbole en pâtisse puisque celle-ci est assurée par un filtre numérique adapté.

On peut observer que dans certaines installations de téléphone mobile on trouve à la fois un filtre adapté et des

corrélateurs glissants, le filtre adapté délivrant un signal de synchronisation. Mais, dans ces installations, le filtre est adapté à une séquence très particulière dite pilote et non pas aux séquences servant à véhiculer l'information. Ce filtre adapté ne fonctionne donc qu'au moment de la réception du symbole pilote. Les corrélations glissants traitent ensuite les séquences véhiculant l'information, alors que le filtre adapté est inopérant. La synchronisation est donc obtenue préalablement à la démodulation.

Dans la présente invention, le filtre adapté traite des symboles véhiculant l'information et entretient en permanence le signal d'horloge nécessaire aux corrélateurs glissants.

Lorsque le synchronisme entre les séquences n'est pas parfait, il est possible d'utiliser plusieurs voies du type à filtre adapté, (au lieu d'une seule) de façon à produire plusieurs signaux d'horloge symbole légèrement décalés les uns par rapport aux autres.

De façon précise, l'invention a donc pour objet un récepteur pour système AMRC, destiné à recevoir des signaux correspondant à des suites de symboles d'information à spectre étalé par des séquences binaires pseudoaléatoires, ce récepteur comprenant K voies de traitement et étant caractérisé par le fait qu'au moins une de ces voies comprend un filtre adapté à l'une des séquences pseudoaléatoires ayant servi à l'étalement du spectre des symboles d'information et un circuit de récupération d'un signal d'horloge au rythme des symboles, les autres voies comprenant chacune un corrélateur glissant travaillant avec une des autres séquences ayant servi à l'étalement du spectre des symboles d'information, chaque corrélateur glissant étant commandé par un signal d'horloge symbole, qui est le signal d'horloge produit par la voie utilisant le filtre adapté.

## Brève description des dessins

- la figure 1, déjà décrite, montre les instants de début des symboles pour trois utilisateurs dans un système AMRC asynchrone ;
- la figure 2, déjà décrite, montre les instants de début des symboles pour trois utilisateurs dans un système AMRC synchrone ;
- la figure 3, déjà décrite, illustre une architecture de récepteur connue ;
- la figure 4, déjà décrite, montre une architecture à plusieurs voies en parallèle ;
- la figure 5, déjà décrite, illustre la structure d'un corrélateur glissant ;
- la figure 6, déjà décrite, illustre la structure d'un filtre adapté ;
- la figure 7, déjà décrite, illustre la sortie d'un filtre adapté ;
- la figure 8, déjà décrite, illustre la sortie d'un corrélateur glissant lorsque la réplique locale de la séquence est alignée avec la séquence émise ;
- la figure 9, déjà décrite, illustre la sortie d'un corrélateur glissant lorsque la réplique locale de la séquence n'est pas alignée avec la séquence émise ;
- la figure 10 représente un mode de réalisation d'un récepteur selon l'invention.

## Description d'un mode particulier de réalisation

La figure 10 montre un récepteur conforme à l'invention. Ce récepteur comprend K voies, $V_1$, $V_2$, ..., $V_K$ dont une voie $V_1$ utilise un filtre adapté, alors que les K-1 autres voies $V_2$, ..., $V_K$, utilisent un corrélateur glissant. Plus précisément, la voie $V_1$ comprend un filtre numérique 25 dont les coefficients sont adaptés à la séquence N°1 utilisée à l'émission, un circuit 12 de récupération de l'horloge symbole Hs, un circuit supplémentaire de traitement $14_1$, apte à effectuer, par exemple, une multiplication retardée, une estimation de canal, etc... et enfin un circuit $16_1$ de décision restituant l'information $d_1$ propre à l'utilisateur ayant utilisé cette première séquence.

La voie $V_2$ comprend un corrélateur glissant $30_2$, un circuit supplémentaire de traitement $14_2$ et un circuit de décision $16_2$ délivrant l'information restituée $d_2$. De même pour les autres voies, et en particulier pour la $V_k$, qui comprend un corrélateur $30_K$, un circuit de traitement $14_K$ et un circuit de décision $16_K$ restituant l'information $d_K$. Les corrélateurs $30_2$, ..., $30_K$ ont besoin, comme il a été expliqué, d'un signal d'horloge pour être synchronisés et celui-ci est constitué, conformément à l'invention, par le signal d'horloge symbole Hs récupéré dans la première voie $V_1$. Cette horloge peut également être appliquée aux circuits $14_1$, $14_2$, ..., $14_K$ et $16_1$, $16_2$, ..., $16_K$.

Le tableau 1 permet de comparer une architecture conforme à l'invention à une architecture classique utilisant soit des corrélateurs glissants, soit des filtres adaptés. La comparaison est effectuée en termes de complexité opératoire et de durée d'acquisition de l'horloge symbole (pour K émetteurs synchrones et des séquences de longueur N).

Tableau 1

| | Récepteur de l'invention | Récepteur classique à filtres adaptés | Récepteur classique à corrélateurs glissants |
|---|---|---|---|
| Durée d'acquisition de l'horloge symbole (en période Ts) | 1 | 1 | <N |
| Complexité opératoire (en nombre de multiplications par période d'échantillonnage) | N+K-1 | KN | K |
| Complexité opératoire (en nombre d'additions par période d'échantillonnage) | N+K-1 | KN | K |

A titre d'exemple, on peut prendre le cas de K=64 utilisateurs synchrones avec des séquences de N=128 chips :

- avec une structure à 64 filtres adaptés, il faut effectuer 16 384 opérations à chaque nouvel échantillon, l'acquisition pouvant se faire en 1 seul symbole ;
- avec une structure à 64 corrélateurs glissants, il faut faire 128 opérations à chaque nouvel échantillon, l'acquisition se faisant en un maximum de 128 symboles ;
- avec une structure hybride selon l'invention, à 1 filtre adapté et 127 corrélateurs glissants, il faut faire 382 opérations à chaque nouvel échantillon, l'acquisition se faisant en une seule période.

  Sur cet exemple, on voit bien l'excellent compromis que réalise la structure proposée par l'invention. En plus, il faut comprendre qu'une structure non hybride à filtres adaptés serait excessivement coûteuse, voire même irréalisable pour des problèmes de dimension.

En résumé, la structure proposée par l'invention permet de :

- tirer profit du synchronisme entre utilisateurs du système et d'acquérir de façon simultanée l'horloge symbole de tous les utilisateurs ;
- profiter de tous les avantages de la structure à filtre adapté ;
- produire de façon rapide et fiable un signal d'horloge symbole grâce à l'utilisation d'un filtre adapté ;
- piloter les voies à corrélateurs glissants avec le signal d'horloge symbole ainsi produit ;
- bénéficier de la faible complexité des structures à corrélateurs glissants ;
- intégrer, dans un seul circuit, la démodulation d'un grand nombre d'émetteurs.

## Revendications

**1.** Récepteur pour système AMRC, destiné à recevoir des signaux correspondant à des suites de symboles d'information à spectre étalé par des séquences binaires pseudoaléatoires, ce récepteur comprenant K voies de traitement ($V_1$, $V_2$, ..., $V_K$) étant **caractérisé par le fait qu'**au moins une de ces voies ($V_1$) comprend un filtre (20) adapté à l'une des séquences pseudoaléatoires ayant servi à l'étalement du spectre des symboles d'information et un circuit (12) de récupération d'un signal d'horloge symbole (Hs), les autres voies ($V_2$, ..., $V_K$) comprenant chacune un corrélateur glissant ($30_2$, ..., $30_K$) travaillant avec une des autres séquences ayant servi à l'étalement du spectre des symboles d'information, chaque corrélateur glissant étant commandé par un signal d'horloge symbole, qui est le signal d'horloge (Hs) produit par la voie ($V_1$) utilisant le filtre adapté (20).

## Patentansprüche

**1.** Empfänger für CDMA-System, bestimmt für den Empfang von Signalen, die Folgen von durch Pseudozufallssequenzen gespreizten Symbolen sind, wobei dieser Empfänger, der K Verarbeitungskanäle ($V_1$, $V_2$, ..., $V_K$) umfasst,

**dadurch gekennzeichnet ist, dass** wenigstens einer dieser Kanäle $V_1$ ein Filter (20), das an eine der Zufallssequenzen angepasst ist, die zur Spreizung des Spektrums der Informationssignale gedient haben, sowie eine Schaltung (12) zur Rückgewinnung eines Symbol-Taktsignals (Hs) umfasst, und die anderen Kanäle ($V_2$, ..., $V_K$) alle einen Gleitkorrelator ($30_2$, ..., $30_K$) umfassen, der mit einer der anderen Sequenzen arbeitet, die zur Spreizung des Spektrums der Informationssymbole gedient haben, wobei jeder Gleitkorrelator durch ein Symbol-Taktsignal gesteuert wird, das das durch den Kanal ($V_1$) erzeugte Taktsignal (Hs) ist, der das angepasste Filter (20) benutzt.

## Claims

1. A receiver for a CDMA system, intended to receive signals corresponding to spread spectrum information symbol streams in pseudorandom binary sequences, this receiver including K processing channels ($V_1$, $V_2$, ..., $V_k$) being **characterised in that** at least one of these channels ($V_1$) includes a filter (20) adapted to one of the pseudorandom sequences having been used for information symbols spectrum spreading and a symbol clock signal (Hs) recovery circuit (12), the other channels ($V_2$, ..., $V_k$) each including a sliding correlator ($30_2$, ..., $30_k$) working with one of the other sequences having been used for information symbols spectrum spreading, each sliding correlator being controlled by a symbol clock signal, which is the clock signal (Hs) produced by the channel ($V_1$) using the adapted filter (20).

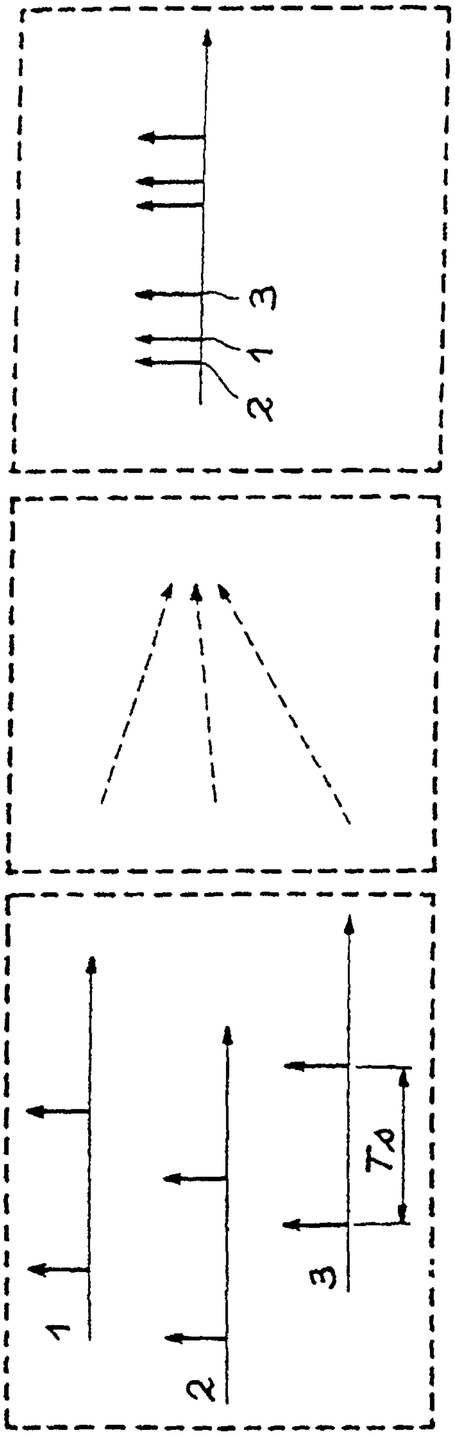


FIG. 1

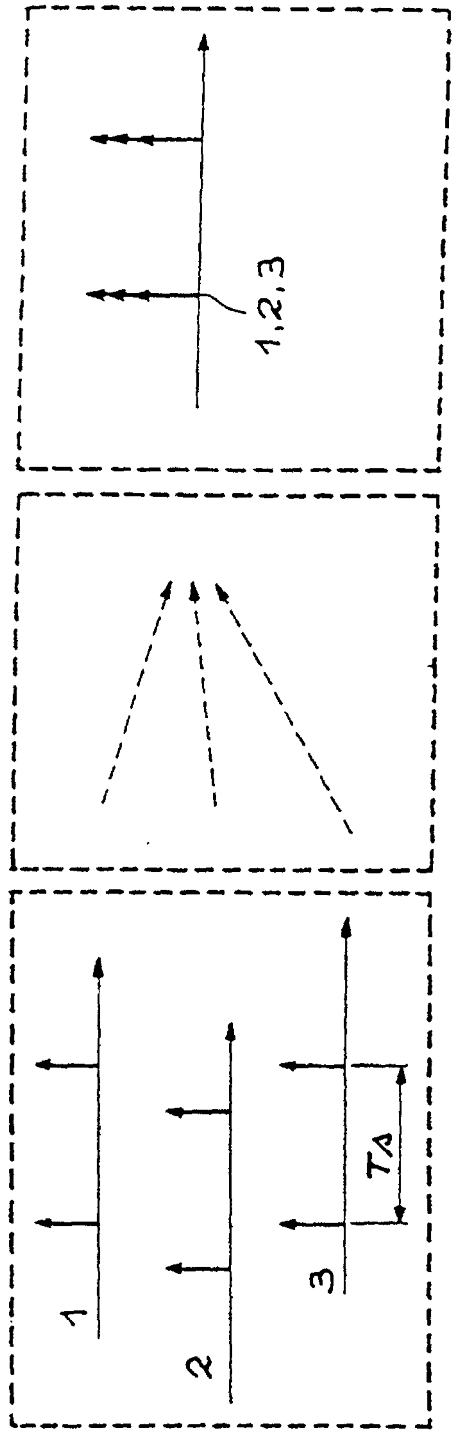


FIG. 2

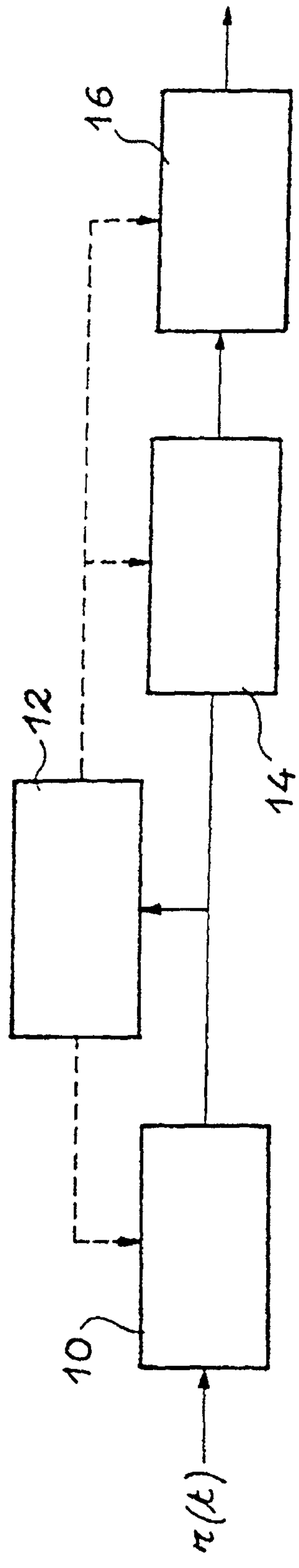


FIG. 3

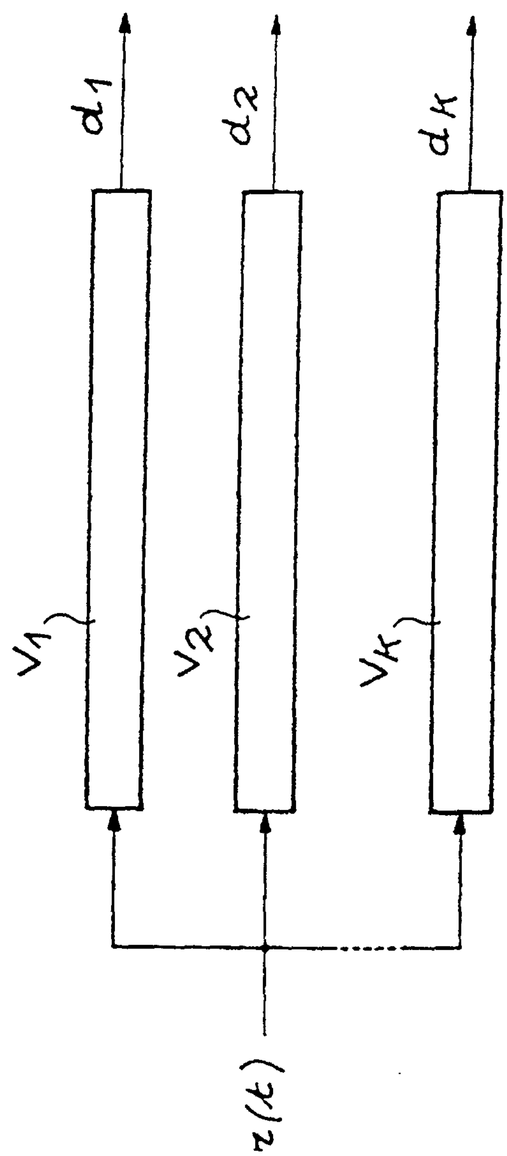


FIG. 4

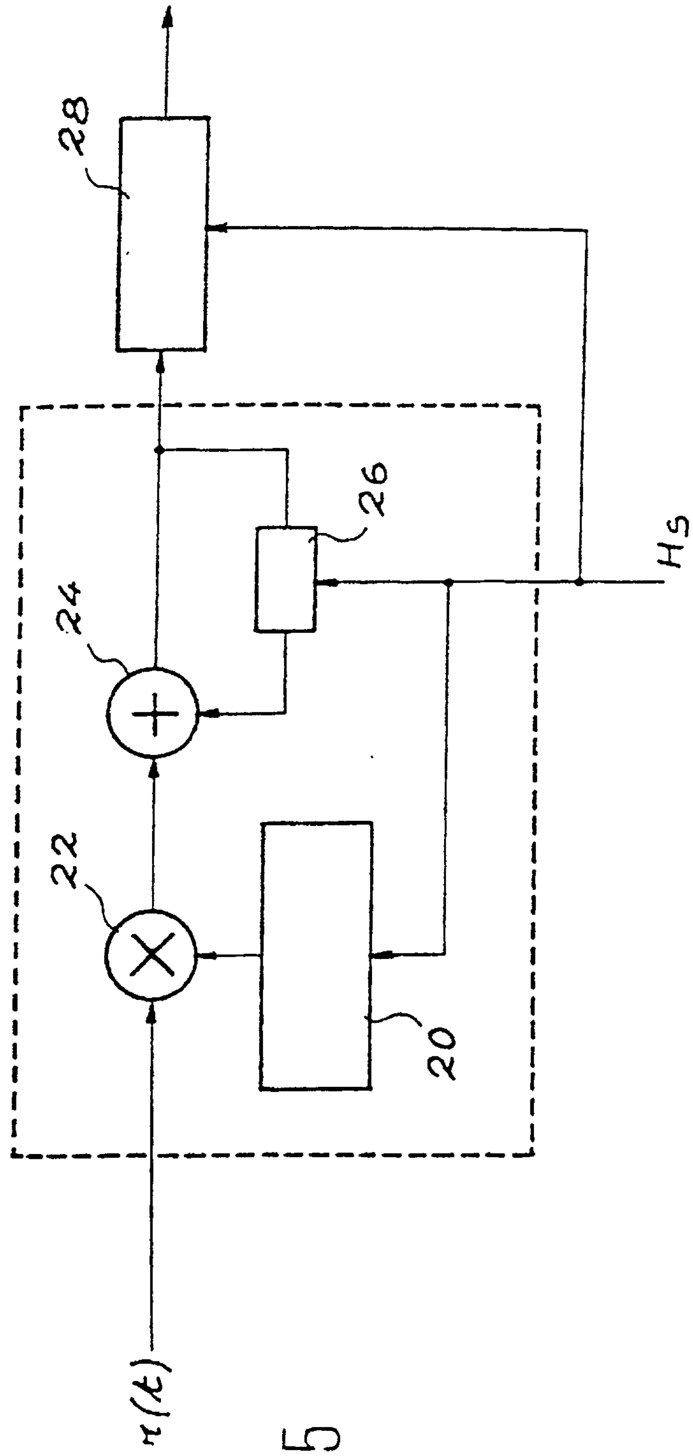


FIG. 5

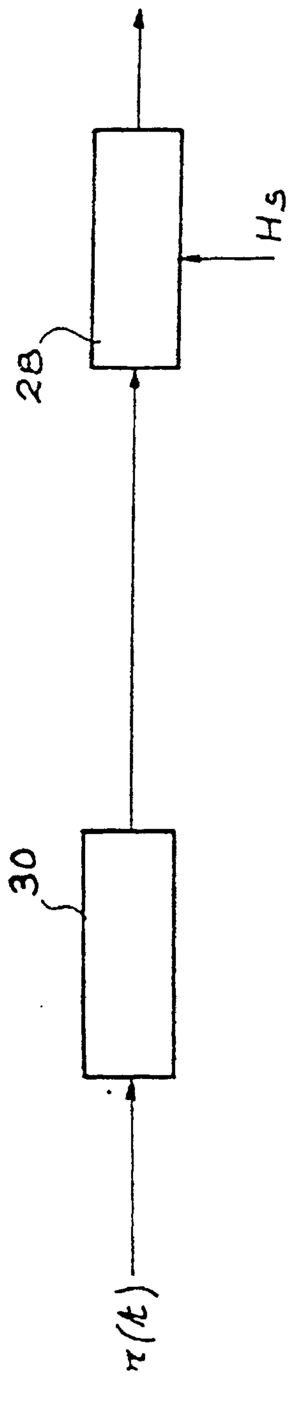


FIG. 6

FIG. 7

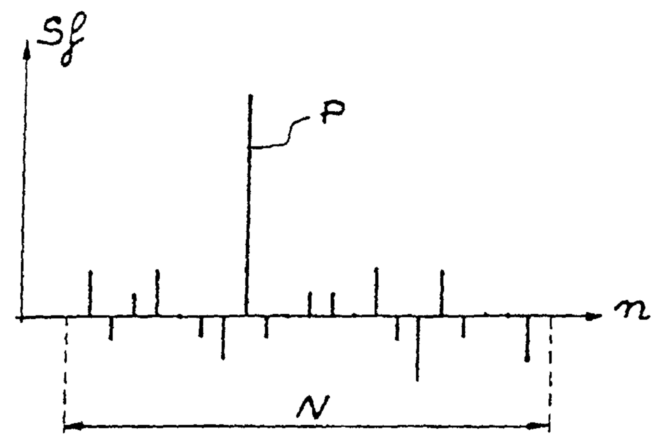


FIG. 8

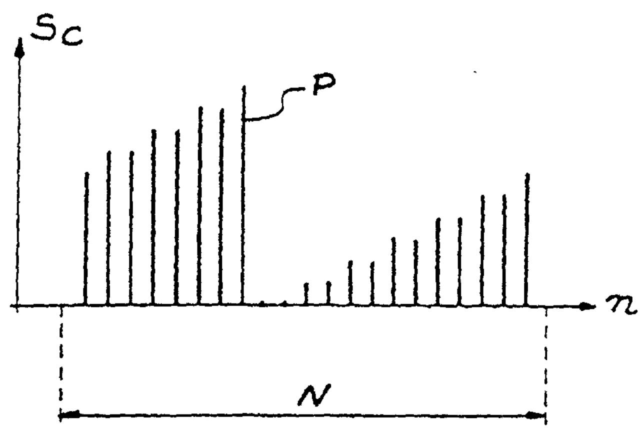


FIG. 9

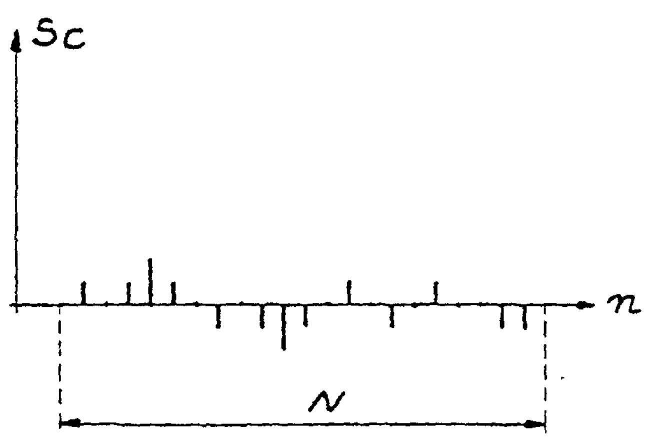

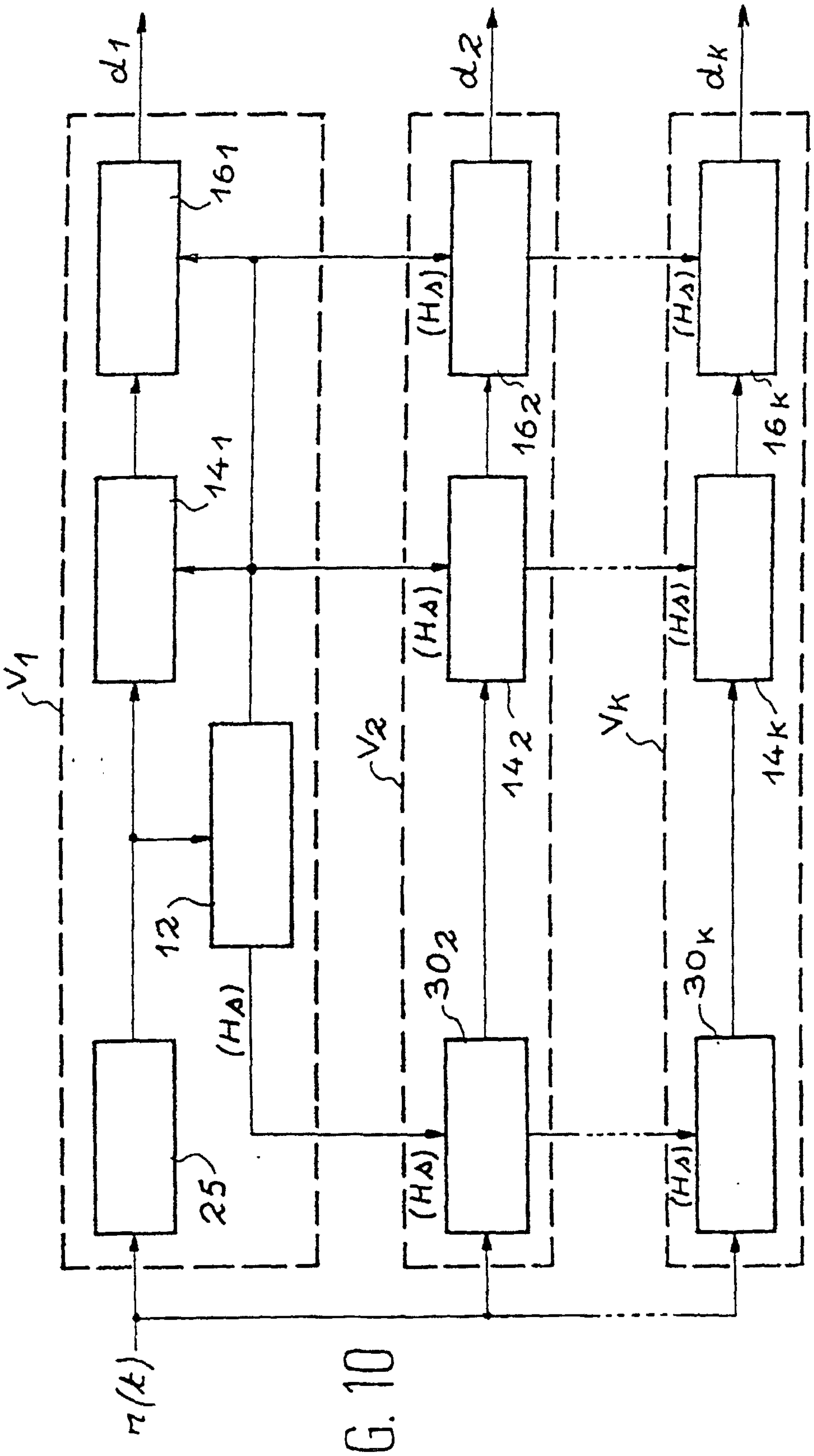


FIG. 10